# EUROPEAN PATENT SPECIFICATION

(11) **EP 3 986 838 B1**
(45) Date of publication and mention of the grant of the patent: **25.11.2026**
(21) Application number: 20732246.2
(22) Date of filing: 17.06.2020
(51) Int. Cl.: C03C 3/062, C03C 3/095, C03C 3/097, C03C 10/00, C03C 27/02, C03C 27/04

(54) **COMPACT SENSOR COMPONENT FOR HARSH ENVIRONMENTS**
KOMPAKTE SENSORKOMPONENTE FÜR RAUE UMGEBUNGEN
COMPOSANT DE CAPTEUR COMPACT POUR ENVIRONNEMENTS HOSTILES

(30) Priority: 22.06.2019 EP 19181876
(43) Date of publication of application: 27.04.2022
(73) Proprietor: SCHOTT AG, 55122 Mainz (DE)
(72) Inventor: MIX, Christian, 84036 Landshut (DE); STRONCZEK, Mark, 80639 München (DE); HARTL, Helmut, 3400 Klosterneuburg (AT)
(74) Representative: Blumbach · Zinngrebe Patentanwälte PartG mbB
(86) International application number: PCT/EP2020/066792
(87) International publication number: WO 2020/260099

(56) References cited:
- EP-A1- 3 650 415
- US-A1- 2011 162 436
- US-A1- 2018 202 914
- US-B2- 9 354 215

## Description

The invention relates to a sensor component which can be applied in harsh environments, such as at high temperatures, and which is rational to manufacture and which enables a compact sensor design.

As used in this description, the term sensor component relates to a sensor itself or any part of a complete sensor, which is subject to the present invention. Harsh environments are typically environments in which high temperature occur and which might also comprise aggressive media, such as hot gases with corrosive and/or degrading chemical substances and/or molecules. An example of such harsh environments might be the exhaust systems of combustion engines, for example in vehicles such as automobiles.

In order to efficiently control processes, e.g. within a combustion engine, there is a need for an increased number of sensors and/or a new generation of advanced sensors. Therefore it is desirable to increase the efficiency of sensor manufacturing as well as to reduce the size of such sensors.

Known solutions of sensor components comprise a feedthrough element which is made of a plurality of parts. Usually there are isolating powders or sintered ceramic parts, which are held in position by metal rings or springs. Such parts require a certain space within the sensor component, which results in relatively large volumes of such sensor components and the space they require when applied to e.g. an exhaust system.

In DE 102013221692 A1 a sensor, especially an oxygen sensor, comprising a powder sealing and further sealing elements is discussed.

Document DE 60114305 T2 discloses a sealing element for a gas sensor comprising a plurality of different sealings.

In US 9354215 B2 a metal to ceramic seal is disclosed in which a multi-component gas sensor is held.

A typical application area of the sensors discussed herein are exhaust gas environments or sensors located close to the engine, sensor types like temperature, gas, PM/PN (as used herein for e.g. particle matter), NOx, or soot load sensors. Those most advantageously need to offer long-term mechanical stability.

The invention especially comprises a feedthrough incorporated within such sensors which allows a much simpler and more compact design. The invention can be summarized as in the independent claims. More specific embodiments are subject of the dependent claims
The inventive concept therefore includes a sensor component 1 with a feedthrough-hole 5, in which an insulation element 3 is located. The insulation element 3 comprises a glass ceramic material which at least forms a joint with the inner wall 6 of the through-hole 5. Of course functional components can be located within the insulation element 3 or insulating component 3 and are fed through the feedthrough-hole 5 in an electrically insulating manner. The area of the sensor component in which the feedthrough-hole 5 is located normally is made of a metal material and/or a ceramic, therefore in most cases is electrically conductive.

The sensor component 1 according to the invention can be used in high temperature applications. Such are applications in which temperatures above 700°C might occur, or even more than 800 °C, or even more than 900 °C, especially between 700 °C and 1100 °C.

The sensor component 1 is especially an electrical and/or electrochemical sensor component which comprises a feedthrough element 2. The feedthrough element 2 is having a feed through-hole 5 with a through-hole inner wall 6 extending from one surface of the feedthrough element 2 to the other surface of the feedthrough element 2. The through-hole walls 6 can be angled and/or structures, for example in order to increase the pull-out forces of the insulation element 3.

An insulation element 3 is located within a feed through-hole 5 of the feedthrough element 2. The feedthrough-hole 5 has a diameter D, and because the insulation element 3 is advantageously joint with the inner wall 6 of the feedthrough-hole 5, the insulation element 3 has a diameter corresponding to Da, an inner diameter Di and a height H, which can define its Volume V.

According to the invention the sensor component is more compact than those in the discussed prior art, allowing dimensions if the insulation element which are chosen from the group consisting of or any combinations thereof:
H is in the range from 2 to 20 mm, and/or
Da is in the range from 2 to 30 mm, and/or
the ratio V /D in mm² is in the range from 0,2 to 100, preferably from 1 to 50, most preferably from 2 to 20, and/or
the ratio H / D is from 0.15 to 1.2, preferably from 0.2 to 1.0, most preferably from 0.4 to 0.8.

How to calculate the volume V of a geometrical body from its dimension height and diameter is commonly known.

In cases the feedthrough element has a height which is higher than the height of the insulation element, H is defined as the height or length if the insulation element which is in contact with the inner wall of the feedthrough-hole.

Commonly, sensor component 1 comprise a functional element 4 which is located within the insulation element 3, such as electrodes for example temperature sensors and/or lambda sensors. Advantageously, the functional element 4 is fixed and thereby hold electrically isolated into place within the insulation element 3. Of course more than one functional element 4 can be located within the insulation element 3. Furthermore, the insulation element 3 or elements 3 are advantageously at least in areas joint with the insulation element 3.

As said before, the insulation element 3 has an outer diameter Da which corresponds to the diameter of the feedthrough-hole 5. The functional elements 4 claim space within the insulation element 3, which thereby has an inner diameter Di which corresponds to the diameter of the at least one functional element 4 or to the sum of diameters of the functional elements 4, if more than one is present. This functional element 4 may have a rectangular or circular cross sectional area and could me made of an insulating multi-layer component as used e.g. for gas sensors.

In such embodiments, the dimensional ranges are according to the invention chosen to be:
Di is in the range from 0.2 to 15 mm, and/or
Da is in the range from 1 to 25 mm.

In the inventive sensor component 1, the insulation element 3 or component 3 is joint with the feedthrough element 2, preferably with at least areas of the inner wall 6 of the feed through-hole 6. This means that there is bond between the jointing area of the feedthrough element 2 and the insulation element 3, which can be a physical and/or a chemical bond. This can be achieved by a thermal manufacturing method, in which the insulation element is advantageously glassed into and/or sintered into the through-hole of the feedthrough-element.

In case the feedthrough element 2 is made of a metal, the thermal expansion of the insulation element 3 can be chosen to be smaller than the thermal expansion of the feedthrough element 2, so that during the cooling down of the feedthrough element 2 with the enclosed insulation element 3, the feedthrough element 2 so to say shrinks onto the insulation element 3 and thereby exerts a compressive stress on the insulation element 3, forming a compression seal. The compression seal provides good tightness and higher pull-out forces.

In a preferred embodiment, the insulation element 3 comprises a glass ceramic material. Most advantageously, the main area or with other words, the majority of the volume of the insulation element, is a glass ceramic material.

A glass ceramic material is according to the known scientific definitions a material which origins from a glass material (or precursor glass), which is transformed via a temperature processing into a material which also comprises crystal phases and/or at least an increased volume of crystal phases. The crystallite phases can reach above 90% of the overall volume, or even above 95% and/or 98% and/or 99%.

In the scope of the present disclosure, a glass ceramic material may also be denoted an at least partially crystallized glass. The glass ceramic or the at least partially crystallized glass may be obtained via crystallization, preferably a controllable crystallization, more preferably a controlled crystallization, so as to obtain a structure in which a preferably narrow spread is resulting for the spatial dimension of the crystals or crystallites which can be assigned to the same crystal phase and/or a preferred spatial arrangements of crystals or crystallites may be achieved. The precursor glass from which the at least partially crystallized glass (or glass ceramic) may be obtained may also be denoted a crystallizable glass.

As a result of crystallization, a crystallizable glass thus becomes an at least partially crystallized glass, i.e. a glass with a proportion of crystal phases of more than 0.1% by volume. Such an at least partially crystallized glass which comprises at least one crystal phase and optionally a glassy phase, for example an at least partially crystallizable glass or a residual glass phase.

According to an embodiment, the proportion of the residual glass phase in the at least partially crystallized glass is less than 10%, preferably less than 5 %, by volume. The at least partially crystallized glass comprises aggregates of crystals. These aggregates of crystals are formed of a multitude of crystals or crystallites. The shape of the crystallites may be needle-like or thread-like or platy, for example. Preferably, the crystallites may be arranged radially, that is, radiating outwards from a central point, (for example spherolithic of in the shape of a fan), blade-like or plate-like crystals or crystallites may be arranged so as to interpenetrate each other as well as the residual glass phase and/or the at least partially crystallized glass.

According to a further embodiment, the crystallizable glass and/or the least least partially crystallized glass comprises the following components in mol-% on an oxide basis:

| | |
|---|---|
| La₂O₃ | more than 0.3 mol-% to less than 5 mol-%, preferably less than or equal to 4.5 mol-%, more preferably less than or equal to 4 mol-%, |
| Nb₂O₅ | 0 mol-% to 9 mol-%, |
| Ta₂O₅ | 0 mol-% bis 7 mol-%, |

wherein

| | |
|---|---|
| Σ (A₂O₅) | is more than 0.2 mol-% to 9 mol-%, |

wherein A refers to an element usually having oxidation state V+ in oxides and comprises and/or may comprise Nb or Ta or P or any combinations thereof, for example.

It has been found that a very reliable and/or temperature stable joint may be formed by adding a suitable amount of oxides La₂O₃, Ta₂O₅ and/or Nb₂O₅ and optionally further oxides A₂O₅. As noted above, A refers to an element usually having oxidation state V+in oxides. However, it is understood that not all atoms "A" comprised by the at least partially crystallized glass need actually be present in the same oxidation state.

In the scope of the present disclosure, oxides La₂O₃, Nb₂O₅ and Ta₂O₅ and optionally further oxides A₂O₅ comprised by the at least partially crystallized glass are also denoted as "glass-matrix forming oxides", meaning that at least during the first stage of crystallization, these oxides remain in the residual glassy phase, thus forming a glassy matrix.

The crystallisable or at least partially glass may further comprise Bi₂O₃ or P₂O₅. However, these components are disadvantageous if a high temperature stability of the feed-through is to be achieved. Therefore, according to a further embodiment, the glass, except as impurities present in amounts of less than 500 ppm each, contains none of the oxides of bismuth and/or phosphorus. In this case, ppm refers to mass fraction.

According to a further embodiment, the glass, except as impurities present in amounts of less than 500 ppm each, contains none of the oxides of alkaline metals and/or boron. This is advantageous, as these components are detrimental in terms of temperature stability. Further, these components may lead to the formation of undesirable crystal phases with low thermal expansion. Furthermore, alkaline oxides may lead to an undesirable low electrical resistance of the at least partially crystallized glass.

According to an embodiment, the glass comprises an oxide RO, wherein

| | |
|---|---|
| Σ (RO) | is less than or equal to 55 mol-% |

wherein R is an element usually having oxidation state II+in oxides, and may for example comprise Ca, Mg, Zn or any combinations thereof.

In other words, RO encompasses alkaline earth oxides as well as ZnO. According to a preferred embodiment, the glass, except as impurities present in amounts of less than 500 ppm each, contains none of the oxides of BaO and/or SrO, in order to avoid undesirable reactions between the glass and joining partners comprising chromium, for example, chromium containing steel or the like.

According to an embodiment, the glass comprises, in mol-% on an oxide basis,

| | |
|---|---|
| SiO₂ | 30 mol-% to 40 mol-%, |
| Al₂O₃ | 3 mol-% to 12 mol-%, |
| CaO | 32 mol-% to 46 mol-%, |
| MgO | 5 mol-% to 15 mol-%, |
| ZnO | 0 mol-% to 10 mol-%, |

and optionally

| | |
|---|---|
| ZrO₂ | 0 mol-% to 4 mol-%, preferably at most 3 mol-%, and/or |
| TiO₂ | 0 mol-% to 4 mol-%, preferably at most 3 mol-%, and/or |
| MnO₂ | 0 mol-% to 5 mol-%. |

Optionally, according to an embodiment, the glass may further comprise TiO₂, ZrO₂, MnO₂ and any combinations thereof. However, the content of these components is limited. In particular, TiO₂ and ZrO₂ known seed materials for crystallization, are not essential in the glass. Further, these components may lead to the formation of undesired crystal phases with low thermal expansion.

According to a further embodiment, the glass may comprise between at least 35 mol-% CaO and at most 46 mol-% CaO, preferably at least 35 mol-% and less than 43.5 mo.-% and/or between at least 5 mol-% MgO and less than 13 mol-% MgO.

According to an embodiment, the crystallizable or at least partially crystallized glass comprises in particular SiO₂ and CaO and MgO and Al₂O₃ and optionally ZnO.

In the quaternate system SiO₂-Al₂O₃-CaO-MgO crystal phases with high coefficient of thermal expansion may be obtained, for example mixed crystals of calcium-magnesium-silicates with high CaO-content, like Åkermanite, and/or merwinite, that may form mixed crystals also with Al₂O₃-containing phases like gehlenite and/or augite. Further, if as an additional component the glass comprises ZnO, harystonite may be present as well.

According to an embodiment, the glas is present and is an at least partially crystallized glass comprising crystals or crystallites of CaO-MgO-silicates with high CaO-content, in particular meso- and/or sorosilicates. Nesosilicates are silicates comprising isolated SiO₄-tetrahedra, whereas sorosilicates are silicates comprising double tetrahedral joined at a bridging oxygen atom, resulting on structural element Si₂O₇. Nesosilicates may be merwinite Ca₃Mg(SiO₄)₂ and/or a mixed crystal with merwinite-like crystal strcuture. Further, the glass may additionally or alternatively comprise o sorosilicate, like Åkermanit Ca₂MgSi₂O₇ oder gehlenite Ca₂Al[AlSiO₇] or mixed crystals thereof. Furthermore, according to an embodiment, the glass may comprise crystal phases with an augite or augite-like structure.

In the scope of the disclosure, mixed crystal refers to a crystal whose chemical composition does not exactly correspond to the stoichiometric composition of a compound. For example, when reference is made to an "akermanite mixed crystal", it is to be understood that the chemical composition of the mixed crystal does not correspond to Ca₂MgSi₂O₇. The mixed crystal may comprise more Ca than according to the stoichiometric composition, or that Zn replaces Ca at least partially. However, the crystal structure of the mixed crystal will correspond predominantly to that of akermanite, even if small deviations may occur with respect to lattice constants, for example.

According to an embodiment, the glass is present and is an at least partially crystallized glass comprising CaO-Mg-silicates rich in CaO, in particular CaO-Mg-nesosilicates and/or sorosilicates rich in CaO, like merwinite and/or mixed crystals with a merwinite-like structure and additionally or alternatively a crystal phase with melilite-structure, like akermanite Ca₂MgSi₂O₇ and/or gehlenite Ca₂Al[AlSiO₇] and/or mixed crystals thereof, and/or crystal phases with augite-structure

Exemplary compositions of crystallizable of at least partially crystallized glasses are given in the following table. Here, compositions are given in mol-% on an oxide basis. Temperatures used for characterization of fusibility of solid ashes, such as softening temperature (SofT), sintering temperature (SinT), sphere temperature (Sph), half-sphere temperature (hsph) and melting/fusion temperature (melt) were determined using a heating microscope (HM). Determination of these temperatures was done in accordance with or on the basis of DIN 51730. The linear coefficient of thermal expansion (CTE or α) is given in units of 10⁻⁶/K. Indexes indicate the temperature range for which the CTE has been determined. Further, T_{g} refers to the glass transition temperature according to ISO 7884-8 that is determined by the point of intersection of the tangents to the two branches of the expansion curve when measuring with a heating rate of 5 K/min.. The softening point of the glass (E_{w}) is defined as the temperature at which the glass has a viscosity of 10^{7.6} dPa s, measured in accordance with or on the basis of ISO 7884-3. t_{k 100} indicates the temperature at which the crystallizable has a specific electrical resistivity of 10⁸ Ω*cm and is preferably determined in a method according to or on the basis of DIN 52326.

**Table 1 Compositions of exemplary glasses**

| Example no. | 1 | 2 | 3 | 4 | 5 | 6 | 7 | 8 |
|---|---|---|---|---|---|---|---|---|
| SiO₂ | 36 | 34 | 36 | 34 | 34 | 38 | 35 | 35 |
| Al₂O₃ | 7 | 6 | 7 | 6 | 9 | 5 | 7,7 | 7 |
| B₂O₃ | | | | | | | | |
| TiO₂ | | | | | | | | |
| MnO₂ | | | | | | | | |
| ZrO₂ | 2 | | | | | | | |
| P₂O₅ | | | | | | | | |
| Bi₂O₃ | | | | | | | | |
| La₂O₃ | 2 | 2 | 2 | 4 | 1 | 2 | 2,6 | 2,2 |
| Nb₂O₅ | 6 | | 3 | | 2 | 1 | 0,2 | 0,6 |
| Ta₂O₅ | | 4 | | 2 | | | 0,3 | 0,6 |
| Y₂O₃ | | | | | | | | |
| R₂O | | | | | | | | |
| ZnO | | 6 | | 4 | | 2 | 3 | 3,3 |
| MgO | 9 | 10 | 10 | 10 | 11 | 10 | 12,2 | 10,3 |
| CaO | 38 | 38 | 42 | 40 | 43 | 42 | 39 | 41 |
| SrO | | | | | | | | |
| Example no. BaO | 1 | 2 | 3 | 4 | 5 | 6 | 7 | 8 |
| Σ | 100 | 100 | 100 | 100 | 100 | 100 | 100 | 100 |
| | | | | | | | | |
| Σ (RO) | 47 | 54 | 52 | 54 | 54 | 54 | 54,2 | 54,6 |
| CaO+MgO | 47 | 48 | 52 | 50 | 54 | 52 | 51,2 | 51,3 |
| Σ (R₂O₃+A₂O₅) | 8 | 6 | 5 | 6 | 3 | 3 | 3,1 | 3,4 |
| Σ (A₂O₅) | 6 | 4 | 3 | 2 | 2 | 1 | 0,5 | 1,2 |
| CaO/MgO | 4,22 | 3,80 | 4,20 | 4,00 | 3,91 | 4,20 | 3,20 | 3,98 |

| Temperates [°C] | | | | | | | | |
|---|---|---|---|---|---|---|---|---|
| HM: SinT | | 767 | 772 | 772 | 770 | 762 | 765 | 770 |
| HM: SofT | | 890 | 925 | | 922 | 811 | | |
| Sph | | 1282 | 1259 | | 1304 | | | |
| Hsph | 1198 | 1289 | 1265 | | 1320 | 1298 | 1340 | 1320 |

| Crystallizable glass | | | | | | | | |
|---|---|---|---|---|---|---|---|---|
| α (20;300°C) | 8,28 | 8,33 | 8,8 | 8,81 | 8,46 | 8,72 | 8,47 | 8,64 |
| α (20;700°C) | 9,24 | 9,43 | 9,81 | 9,8 | 9,42 | 9,88 | 9,63 | 9,65 |
| T_{g} [°C] | 752 | 743 | 754 | 737 | 753 | 741 | 739 | 734 |
| Ew[°C] | | | 877 | | 883 | 873 | 878 | 875 |
| Density [g/cm³] | 3,43 | 3,77 | 3,27 | 3,64 | 3,13 | 3,22 | 3,28 | 3,32 |
| tₖ100[°C] | 572 | 596 | 588 | | 604 | 593 | 611 | 606 |
| Young's modulus [GPa] | | | 107 | | 107 | 105 | 107 | 106 |

| Crystallized glass | | | | | | | | |
|---|---|---|---|---|---|---|---|---|
| **Crystallization at 1000°C/20 min** | | | | | | | | |
| α (20;700°C) | 8,7 | 9,3 | 10,9 | 9,9 | 9,3 | 9,6 | 9,96 | 9,3 |
| α (20;1000°C) | 9,4 | 9,55 | 11,1 | 10,15 | 9,6 | 9,66 | 10,23 | 9,7 |

| **Crystallization at 1040°C/200 min** | | | | | | | | |
|---|---|---|---|---|---|---|---|---|
| α (20;700°C) | 10,53 | 9,2 | 10, 3 | 9,7 | 9, 7 | 10,2 | 9,25 | 10,15 |
| α (20;1000°C) | 10,25 | 9,55 | 10,75 | 10 | 9,65 | 10,35 | 9,15 | 10,2 |

**Table 1 (continued)**

| Example no. | 9 | 10 | 11 | 12 | 13 | 14 | 15 | 16 |
|---|---|---|---|---|---|---|---|---|
| SiO₂ | 33,2 | 34,5 | 35 | 36 | 35,3 | 36,8 | 36,4 | 35 |
| Al₂O₃ | 10 | 6,6 | 6 | 8 | 7,7 | 6,6 | 8 | 6,6 |
| B₂O₃ | | | | | | | | |
| TiO₂ | | | | 2 | | | | |
| MnO₂ | | | 2 | | | | | |
| ZrO₂ | | | | | 1,2 | 0,3 | | |
| P₂O₅ | | | | | | | | |
| Bi₂O₃ | | | | | | | | |
| La₂O₃ | 1,7 | 2,2 | 3 | 2,4 | 3 | 2,6 | 2,8 | 2,4 |
| Nb₂O₅ | 1,2 | 1,6 | 2 | | 0,8 | 0,3 | 0,6 | 0,6 |
| Ta₂O₅ | 0,5 | 0,1 | | 0,3 | | | 0,4 | 0,4 |
| Y₂O₃ | | | | | | | | |
| R₂O | | | | | | | | |
| ZnO | 3 | 2 | | 1 | 1 | | 1,4 | 6,4 |
| MgO | 8,2 | 10 | 10 | 11,8 | 10 | 10,8 | 11,8 | 10,6 |
| CaO | 42,2 | 43 | 42 | 38,5 | 41 | 42,6 | 38,6 | 38 |
| SrO | | | | | | | | |
| BaO | | | | | | | | |
| Summe | 100 | 100 | 100 | 100 | 100 | 100 | 100 | 100 |
| Σ (RO) | 53,4 | 55 | 52 | 51,3 | 52 | 53,4 | 51,8 | 55 |
| CaO+MgO | 50,4 | 53 | 52 | 50,3 | 51 | 53,4 | 50,4 | 48,6 |
| Σ (R₂O₃+A₂O₅) | 3,4 | 3,9 | 5 | 2,7 | 3,8 | 2,9 | 3,8 | 3,4 |
| Σ (A₂O₅) | 1,7 | 1,7 | 2 | 0,3 | 0,8 | 0,3 | 1 | 1 |
| CaO/MgO | 5,15 | 4,30 | 4,20 | 3,26 | 4,10 | 3,94 | 3,27 | 3,58 |

| Temperatures [°C] | | | | | | | | |
|---|---|---|---|---|---|---|---|---|
| HM: SinT | 770 | 762 | 760 | 761 | | | 762 | |
| HM: SofT | | | | | | | | |
| Sph | 1308 | 1270 | 1313 | 1290 | | | 1295 | |
| Hsph | 1320 | 1279 | 1318 | 1300 | | | 1299 | |

| Crystallizable glass | | | | | | | | |
|---|---|---|---|---|---|---|---|---|
| α (20;300°C) | 8,4 | 9,05 | 8,94 | 8,5 | 8,7 | 8,9 | 8,5 | 8,6 |
| α (20;700°C) | 9,4 | 10 | 10,04 | 9,53 | 9,62 | 9,84 | 9,57 | 9,8 |
| T_{g} [°C] | 749 | 749 | 747 | 746 | 754 | 757 | 747 | 726 |
| Ew[°C] | 880 | 875 | 880 | 878 | 891 | 900 | 884 | 862 |
| Density [g/cm³] | 3,26 | 3,28 | 3,35 | 3,23 | 3,29 | 3,2 | 3,29 | 3,37 |
| tₖ100[°C] | 616 | 598 | 590 | 606 | 607 | 609 | 609 | 607 |
| Young's modulus [GPa] | 106 | 106 | 107 | 107 | | | | |

| Crystallized glass | | | | | | | | |
|---|---|---|---|---|---|---|---|---|
| **Crystallization at 1000°C/20 min** | | | | | | | | |
| α (20;700°C) | 10,6 | 10,75 | | 10,55 | | 10,7 | | 10,2 |
| α (20;1000°C) | 11,1 | 11,1 | | 11,1 | | 11 | | 10,2 |

| **Crystallization at 1040°C/200 min** | | | | | | | | |
|---|---|---|---|---|---|---|---|---|
| α (20;700°C) | 9,5 | 10 | 9,55 | | 10,3 | 10,4 | 9,4 | |
| α (20;1000°C) | 9,65 | 9,7 | 9,7 | | 10,1 | 10,3 | 9,6 | |

Normally the glass ceramic material has a higher overall melting temperature than its glass origin, allowing the sensor component to be exposed to higher temperature than its production temperature. In a most advantageous embodiment, the glass ceramic material has crystallite phases which form a structure, in which individual crystals are limited in movement also when the glass phase becomes viscous and/or even liquid.

Compared to the prior art, the invention provides furthermore the advantage to preferably provide a glass ceramic material of the insulations element which has a closed surface, preferably a glassy surface. This means that there is a thin layer of the glass phase on the outer surface of the insulation element. For example, it can be seen that in embodiments there is a gradient in the crystallite structure from the surface towards the inner volume of the insulation element, in which the individual structure vary and/or the amount of volume the crystallites take within the overall structure is increasing. Such gradients is beneficial for forming the joint between the feedthrough element and the insulation element.

The glassy layer and/or crystallite gradient also advantageously provides a closed surface, which means that the surface has no open pores, except of course random imperfections, which are not relevant for the performance of the sensor component. Even if the insulation component might comprise pores within its volume, there is a gradient in pores with essentially no pores at the surfaces and possible pores within the volume of the insulation element. The closed surface has the advantage, that contaminating substances such as residuals within exhaust gases are less likely to adhere to the surface, which contributes to the reliability of the overall sensor component.

Further, it has been found that the high viscosity of the at least partially crystallized glass at high temperatures allows for joining angular components, especially for angular functional elements, to be reliably joined to a feedthrough element with standard circular or nearly circular cross section. That is, even a functional element with angular cross section, like a square cross section, may be joined using glasses according to the disclosure without the occurrence of cracks.

This has not been possible so far, as upon joining of angular-shaped functional elements to circular-shaped feedthrough elements, high stresses will result in the regions of the corners of the angular-shaped functional element, thus leading to crack formation. However, this can be avoided by using the glasses according to embodiments of the disclosure. Additionally, applying a mechanical load may further help to realize a crack-free joining of angular-shaped components in a circular shaped feedthrough element. It is assumed that a high content of crystals, preferably crystals and crystallites forming aggregates that interpenetrate each other, as described above, and, thus, a high amount of grain boundaries, impedes a transfer of tension, thus enabling a crack-free joint.

Further, is has been found that with glasses according to the disclosure, chemical bonds form at the interface between joining partners and the glass. This chemical bonding at the interfaces between the joining partners, that is, the feedthrough element(s) and/or the functional element(s) on the one hand and the glass on the other hand leads to a very stable joint, with the result that high forces need to be applied in order to pull out the functional element. Inventors assume that by using glasses according to the disclosure as insulation element material (that may also be denoted a "joining material"), pull out forces may be up to ten times higher compared to pull out forces observed for standard joints using pressed ceramic powder as joining material. In the scope of the disclosure, functional element(s) and/or feedthrough element(s) may also be called "joining partner(s)".

For inner diameters Di of the insulation element of 6 mm or more and an outer diameter Da of the insulation element of 10 mm or more, pull out forces of up to 10 kN could be achieved surprisingly for feedthroughs according to embodiments of the present disclosure using steel 1.4762 as material for the functional element. This may be achieved by carefully selecting and/or matching the coefficients of thermal expansion of feedthrough element, insulation element and functional element.

According to an embodiment, therefore, the absolute value of the differences between the thermal expansion coefficients of a joining partner material and an insulation element material is 5*10⁻⁶/K or less, preferably 3*10⁻⁶/K or less and more preferably 1*10⁻⁶/K or less.

According to this very advantageous embodiment, the joint and, thus, the sensors may withstand very high temperatures of up to 1000°C and even more.

Inventors assume that the high temperature resistance of the joint according to embodiments of the disclosure may be due to the presence of interpenetrating crystals and crystal aggregates and the texture of the at least partially crystallized glass thus achieved. Inventors further believe that due to this very advantageous structure of the at least partially crystallized glass, even softening of a optional residual glass phase at high temperatures may be made up for.

The insulation element according to the invention is an one-piece part, preferably made of a single material component or from a plurality of single material components which are joint together to form an one-piece part. An one-piece part can only be taken apart by destructing the insulation element.

It is also provided for, that the insulation element 3 has a surface with structures which enhance the surface area, preferably at least an element 31 for increasing the surface are. Such can be elevated and/or impressed structure and/or even angled surfaces. If in the use of the sensor component 1 substances are layered and/or condensed onto the surface of the insulation element 3, such can reduce the precision of the sensor measurement and/or eventually result into a short circuit of the insulation element. The said structures 31 prevent such short circuits and/or even prevent the deposition of such layers by shadowing effects. It can also be considered to provide the described structures 31 with edges, for example sharp edges or edges with small edge radii, in order to break depositing layers at those edges. When calculating the volume V, those structures are not taken into account.

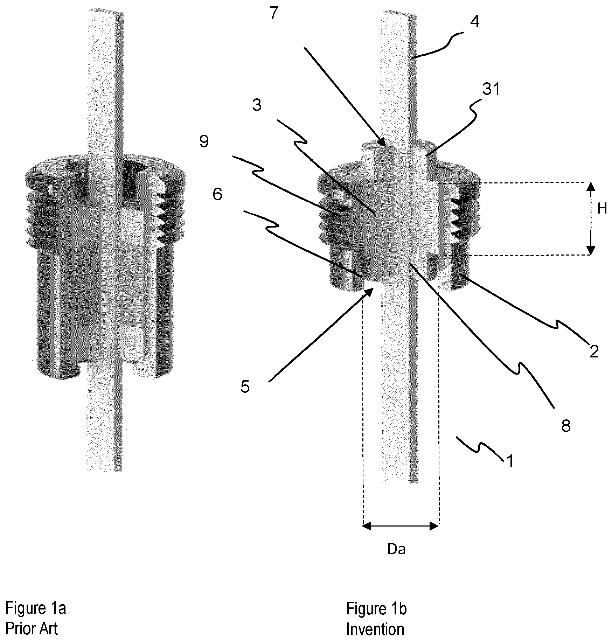

The invention and its practical realization can be demonstrated by the comprised figures. Figure 1a shows a known sensor component according to the prior art. It can be clearly seen that the insulation element is comprised of various parts.

Figure 1b shows the sensor component 1 according to the invention. The insulation component 3 is a one-piece part.

Besides D and H as described above, the symbols of the Figures have the following meaning:
- 1: sensor component
- 2: feedthrough element
- 3: insulation element
- 31: element for increasing surface area
- 4: functional element
- 5: feed through-hole
- 6: inner wall of the through-hole
- 7: through hole
- 8: through hole inner wall
- 9: outer threading

Examples produced have the sizes and ratios of insulation element dimensions as enclosed in the following table.

| | | | | | | | | | | |
|---|---|---|---|---|---|---|---|---|---|---|
| D (mm) | 2 | 4 | 6 | 8 | 12 | 4 | 8 | 12 | 20 | 24 |
| Da (mm) | 1 | 2 | 4 | 5 | 8 | 3 | 6 | 8 | 12 | 16 |
| Di (mm) | 0.5 | 1 | 2 | 2.5 | 5 | 0.7 | 3 | 4 | 8 | 8 |
| H (mm) | 2 | 2 | 2 | 2 | 2 | 4 | 4 | 4 | 4 | 8 |
| H/D | 1 | 0.5 | 0.33 | 8 | 0.16 | 1 | 0.5 | 0.33 | 0.2 | 0.16 |
| V (mm³) | 1.2 | 4.7 | 18.9 | 29.4 | 61.3 | 26.7 | 84.8 | 150.8 | 251.3 | 1206.4 |
| V/D (mm²) | 0.6 | 1.2 | 3.2 | 3.7 | 5.1 | 6.7 | 10.6 | 12.6 | 12.6 | 50.3 |

The functional element 4 is located within the insulation element 3, preferably being at least in areas joint with the insulation element 3, so that the insulation element 3 has an outer diameter Da of the feedthrough-hole and an inner diameter Di which corresponds to the diameter of the at least one functional element 4. D is the outer diameter of the feedthrough element.

The feedthrough element 2 is according to the invention made of metal. Suitable metals may be steels, such as standard steels, stainless steels, rustproof steels, and high-temperature stable ferritic steels, which are also known under the brand name Thermax, for example Thermax 4016, Thermax 4742, or Thermax 4762, or Crofer 22 APU or CroFer 22 H, or NiFe-based materials, e.g. NiFe45, NiFe47, or nickel plated pins, or known under the brand name Inconel, for example Inconel 718 or X-750, or steels such as known under the designations CF25, Alloy 600,

Alloy 625, Alloy 690, SUS310S, SUS430, SUH446, or SUS316, or austenitic steels such as 1.4828 or 1.4841. Therefore, the feedthrough element can advantageously be composed of ferritic highly-corrosion resistant steel, advantageously: 1.4742, 1.4755, 1.4760, 1.4762, and/or Inconel steel (Alloy 600, Alloy 601, Alloy 625, X-750) and/or stainless steel. Further, the feedthrough element may comprise or consist of a high-temperature stable ceramic compound such as an alumina-based ceramic or a zirconia-based ceramic, for example a ceramic comprising Y-stabilized zirconia or ceramics such as Al₂O₃, ZrO₂, forsterite, YSZ.

The functional element 4 can be essentially a pin and/or an electrical conductor and/or a sensing element and can be essentially made of or comprise, especially in the area of the insulation element, a steel, such as a standard steel, stainless steel, rustproof steels and high-temperature stable ferritic steel, like steels knowns under the brand name Thermax, for example Thermax 4016, Thermax 4742, or Thermax 4762, or Crofer 22 APU or CroFer 22 H, or NiFe-based materials, e.g. NiFe45, NiFe47, or nickel plated pins, or known under the brand name Inconel, for example Inconel 718 or X-750, or steels such as known under the designations CF25, Alloy 600, Alloy 625, Alloy 690, SUS310S, SUS430, SUH446, or SUS316, or austenitic steels such as 1.4828 or 1.4841, or ferritic highly-corrosion resistant steel such as 1.4742, 1.4755, 1.4760, 1.4762 and/or Kanthal heat wires. Further, the functional element may comprise or consist of a high-temperature stable ceramic compound such as an alumina-based ceramic or a zirconia-based ceramic, for example a ceramic comprising Y-stabilized zirconia or and/or ceramics such as Al₂O₃, ZrO₂, forsterite, YSZ (yttrium-stabilized zirconia).

As can be seen by the foregoing description and the description in its entirety, the inventive sensor component 1 is more compact than the multi piece sensor components presently used. Therefore the invention also allows to reduce the outer form factor of the overall sensor component. Such sensor component 1 can be provided with an outer threading adapted to mount the sensor component to other elements or devices, such the exhaust system, for example the exhaust pipes, of an combustion engine. According to the invention, the outer threading 9 advantageously has a diameter which is smaller than 14 mm. In means of standard measuring of and tooling for threading, the outer threading can be smaller than M14, preferably it is in the range from M14 to M6. This allows to increase the number of sensor components 1 within an exhaust system and/or to move the sensor components 1 into areas, in which there is only limited space because of other components or structures of a combustion engine.

The sensor component 1 according to the invention can be beneficially used for measuring exhaust gases of a combustion engine. They are preferably used as lambda sensor and/or NOₓ sensor and/or particle matter sensor and/or temperature sensor.

The benefits of the invention contribute to improved fuel economy and can help to allow combustion engines to comply with stricter emission standards such as EURO 6. The need for innovative engine-management systems and intelligent exhaust-treatment technologies will increase further with the likely introduction of EURO 7. Not only will there be more and more sophisticated sensors, but they need to perform reliably in extreme temperatures and corrosive environments. The inventive sensor components provide superior robustness, while also offering more rational manufacturing methods and reduced design complexity.

Exposed to exhaust gas environments or located close to the engine, sensor types like temperature, gas, PM/PN, NOₓ, or soot load sensors need to offer long-term mechanical stability in corrosive, ultra-high temperature conditions. In exhaust gas applications for example, sensors need to maintain good performance in temperature cycling conditions up to 950°C for at least 50.000 cycles. Those requirements can be met with the sensor components according to the invention. They are also extremely temperature and corrosion resistant, for example to diesel and/or gasoline exhaust gases and chemicals, such as AdBlue.

As further advantage, no interface materials are needed to form a direct seal of the insulation element and the feedthrough element.

Due to the reduced volume the insulation element has according to the invention, the overall sensor component heats up or cools down faster than the sensor component according to the prior art, this means that the thermal equilibrium is reached faster.

## Claims

1. Sensor component for application temperatures above 700°C, especially electrical and/or electrochemical sensor component (1), comprising
a feedthrough element (2) made of metal,
the feedthrough element (2) having a through-hole with a through-hole inner wall extending from one surface of the feedthrough element to the other surface of the feedthrough element (2),
wherein an insulation element (3) is located within a through-hole of the feedthrough element (2), the insulation element (3) is joint with the feedthrough element (2) so that there is a physical and/or a chemical bond between the feedthrough element (2) and the insulation element (3),
the through-hole has a diameter Da,
the insulation element (3) has a Volume V and a height H, and wherein the dimensional data are chosen from the group consisting of or any combinations thereof:
H is in the range from 2 to 20 mm, and/or
D is the outer diameter of the feedthrough element in the range from 2 to 30 mm, and/or
the ratio V /D in mm² is in the range from 0,2 to 100, preferably from 1 to 50, most preferably from 2 to 20, and/or
the ratio H / D is from 0.15 to 1.2, preferably from 0.2 to 1.0, most preferably from 0.4 to 0.8, and wherein the insulation element (3) is a one-piece part.

2. Sensor component according to claim 1,
wherein at least one functional element (4) is located within the insulation element (3), preferably being at least in areas joint with the insulation element (3), so that the insulation element (3) has an outer diameter Da and an inner diameter Di which corresponds to the diameter of the at least one functional element (4), and
Di is in the range from 0.2 to 15 mm, and/or
Da is in the range from 1 to 25 mm.

3. Sensor component according to at least one of the preceding claims,
wherein the insulation element (3) is joint with the feedthrough element (2), preferably with at least areas of the inner wall of the through-hole.

4. Sensor component according to at least one of the preceding claims,
wherein the insulation element (3) comprises a glass ceramic material.

5. Sensor component according to the preceding claim,
wherein the glass ceramic material of the insulation element (3) has a closed surface, preferably a glassy surface, most preferably a surface which does not, except random imperfections, has open pores.

6. Sensor component according to at least one of the preceding claims,
wherein the insulation element (3) is made of a single material component or from a plurality of single material components which are joint together to form a one-piece part.

7. Sensor component according to at least one of the preceding claims,
wherein the insulation element (3) has a surface with structures, preferably at least an element (31) for increasing the surface are, which enhance its surface area.

8. Sensor component according to at least one of the preceding claims,
wherein the sensor component (1) has an outer threading adapted to mount the sensor component (1) to other elements or devices, wherein the outer threading has a diameter which is smaller than 14 mm, preferably the outer threading is M14 or smaller, preferably in the range from M14 to M6.

9. Use of a sensor component according to at least one of the preceding claims for measuring exhaust gases of an combustion engine, preferably as lambda sensor and/or NOx sensor and/or particle matter sensor and/or temperature sensor and/or soot load sensor.

## Patentansprüche

1. Sensorkomponente (1) für Anwendungstemperaturen oberhalb von 700 °C, insbesondere elektrische und/oder elektrochemische Sensorkomponente, umfassend ein aus Metall bestehendes Durchführungselement (2),
wobei das Durchführungselement (2) eine Durchgangsöffnung aufweist, mit einer Durchgangsöffnung-Innenwandung, die sich von einer Oberfläche des Durchführungselements zu der anderen Oberfläche des Durchführungselements (2) erstreckt,
wobei in der Durchgangsöffnung des Durchführungselements (2) ein Isolationselement (3) angeordnet ist,
wobei das Isolationselement (3) mit dem Durchführungselement (2) derart verbunden ist, dass zwischen dem Durchführungselement (2) und dem Isolationselement (3) eine physikalische und/oder eine chemische Verbindung besteht,
wobei die Durchgangsöffnung einen Durchmesser Da aufweist,
wobei das Isolationselement (3) ein Volumen V und eine Höhe H aufweist, und wobei die Abmessungsdaten ausgewählt sind aus folgender Gruppe oder beliebigen Kombinationen dieser:
- H liegt im Bereich von 2 bis 20 mm und/oder
- D, der Außendurchmesser des Durchführungselements, liegt im Bereich von 2 bis 30 mm und/oder
- das Verhältnis V/D, in mm², liegt im Bereich von 0,2 bis 100, bevorzugt von 1 bis 50, besonders bevorzugt von 2 bis 20, und/oder
- das Verhältnis H/D beträgt 0,15 bis 1,2, bevorzugt 0,2 bis 1,0, besonders bevorzugt 0,4 bis 0,8, und
wobei das Isolationselement (3) ein einstückiges Bauteil ist.

2. Sensorkomponente nach Anspruch 1,
wobei in dem Isolationselement (3) mindestens ein Funktionselement (4) angeordnet ist, das bevorzugt zumindest bereichsweise mit dem Isolationselement (3) verbunden ist, so dass das Isolationselement (3) einen Außendurchmesser Da und einen Innendurchmesser Di aufweist, der dem Durchmesser des mindestens einen Funktionselements (4) entspricht, und
- Di im Bereich von 0,2 bis 15 mm liegt und/oder
- Da im Bereich von 1 bis 25 mm liegt.

3. Sensorkomponente nach mindestens einem der vorhergehenden Ansprüche,
wobei das Isolationselement (3) mit dem Durchführungselement (2) verbunden ist, bevorzugt mit zumindest Bereichen der Innenwandung der Durchgangsöffnung.

4. Sensorkomponente nach mindestens einem der vorhergehenden Ansprüche,
wobei das Isolationselement (3) ein Glaskeramikmaterial umfasst.

5. Sensorkomponente gemäß dem vorhergehenden Anspruch,
wobei das Glaskeramikmaterial des Isolationselements (3) eine geschlossene Oberfläche aufweist, bevorzugt eine glasartige Oberfläche, besonders bevorzugt eine Oberfläche, die abgesehen von zufälligen Fehlstellen keine offenen Poren aufweist.

6. Sensorkomponente nach mindestens einem der vorhergehenden Ansprüche,
wobei das Isolationselement (3) aus einer einzigen Materialkomponente besteht, oder aus einer Mehrzahl von einzelnen Materialkomponenten, die miteinander verbunden sind, um ein einstückiges Bauteil zu bilden.

7. Sensorkomponente nach mindestens einem der vorhergehenden Ansprüche,
wobei das Isolationselement (3) eine mit Strukturen versehene Oberfläche aufweist, vorzugsweise zumindest ein Element (31) zur Vergrößerung der Oberfläche, durch das die Oberfläche vergrößert wird.

8. Sensorkomponente nach mindestens einem der vorhergehenden Ansprüche,
wobei die Sensorkomponente (1) ein Außengewinde aufweist, das zur Befestigung der Sensorkomponente (1) an anderen Elementen oder Vorrichtungen ausgebildet ist, wobei der Durchmesser des Außengewindes kleiner als 14 mm ist, wobei das Außengewinde vorzugsweise M14 oder kleiner ist, besonders bevorzugt im Bereich von M14 bis M6.

9. Verwendung einer Sensorkomponente nach mindestens einem der vorhergehenden Ansprüche zur Messung von Abgasen eines Verbrennungsmotors, vorzugsweise als Lambdasonde und/oder NOx-Sensor und/oder Partikelsensor und/oder Temperatursensor und/oder Rußbeladungssensor.

## Revendications

1. Composant de capteur destiné à des températures d'application supérieures à 700 °C, en particulier composant de capteur électrique et/ou électrochimique (1), comprenant
un élément de traversée (2) en métal,
l'élément de traversée (2) présentant un trou traversant avec une paroi intérieure de trou traversant s'étendant d'une surface de l'élément de traversée à l'autre surface de l'élément de traversée (2),
dans lequel un élément d'isolation (3) est situé à l'intérieur d'un trou traversant de l'élément de traversée (2),
l'élément d'isolation (3) est relié à l'élément de traversée (2) de telle sorte qu'il existe une liaison physique et/ou chimique entre l'élément de traversée (2) et l'élément d'isolation (3),
le trou traversant a un diamètre Da,
l'élément d'isolation (3) présente un volume V et une hauteur H, et dans lequel les données dimensionnelles sont choisies dans le groupe constitué de ceux-ci ou de toute combinaison de ceux-ci :
H est dans la plage de 2 à 20 mm, et/ou
D est le diamètre extérieur de l'élément de traversée dans la plage de 2 à 30 mm, et/ou
le rapport V/D en mm² est dans la plage de 0,2 à 100, de préférence de 1 à 50, le plus préférentiellement de 2 à 20, et/ou
le rapport H/D va de 0,15 à 1,2, de préférence de 0,2 à 1,0, le plus préférentiellement de 0,4 à 0,8, et
dans lequel l'élément d'isolation (3) est une pièce monobloc.

2. Composant de capteur selon la revendication 1,
dans lequel au moins un élément fonctionnel (4) est situé à l'intérieur de l'élément d'isolation (3), de préférence au moins dans des zones reliées à l'élément d'isolation (3), de sorte que l'élément d'isolation (3) présente un diamètre extérieur Da et un diamètre intérieur Di qui correspond au diamètre de l'au moins un élément fonctionnel (4), et
Di est dans la plage de 0,2 à 15 mm, et/ou
Da est dans la plage de 1 à 25 mm.

3. Composant de capteur selon au moins l'une des revendications précédentes,
dans lequel l'élément d'isolation (3) est relié à l'élément de traversée (2), de préférence à au moins des zones de la paroi interne du trou traversant.

4. Composant de capteur selon au moins l'une des revendications précédentes,
dans lequel l'élément d'isolation (3) comprend un matériau vitrocéramique.

5. Composant de capteur selon la revendication précédente, dans lequel le matériau vitrocéramique de l'élément d'isolation (3) présente une surface fermée, de préférence une surface vitrée, le plus préférentiellement une surface qui ne présente pas, sauf imperfections aléatoires, de pores ouverts.

6. Composant de capteur selon au moins l'une des revendications précédentes,
dans lequel l'élément d'isolation (3) est constitué d'un composant à matériau unique ou d'une pluralité de composants à matériau unique qui sont assemblés pour former une pièce monobloc.

7. Composant de capteur selon au moins l'une des revendications précédentes,
dans lequel l'élément d'isolation (3) présente une surface avec des structures, de préférence au moins un élément (31) d'agrandissement de la surface, qui augmentent sa surface.

8. Composant de capteur selon au moins l'une des revendications précédentes,
dans lequel le composant de capteur (1) présente un filetage externe adapté pour monter le composant de capteur (1) sur d'autres éléments ou dispositifs, dans lequel le filetage externe a un diamètre inférieur à 14 mm, de préférence le filetage externe est M14 ou inférieur, de préférence dans la plage de M14 à M6.

9. Utilisation d'un composant de capteur selon au moins l'une des revendications précédentes pour la mesure des gaz d'échappement d'un moteur thermique, de préférence en tant que capteur lambda et/ou capteur de NOx et/ou capteur de particules et/ou capteur de température et/ou capteur de charge de suie.
